(19) **Europäisches Patentamt / European Patent Office / Office européen des brevets**

(11) **EP 1 908 791 A1**

(12) **EUROPEAN PATENT APPLICATION**
published in accordance with Art. 153(4) EPC

(43) Date of publication:
**09.04.2008 Bulletin 2008/15**

(51) Int Cl.:
*C08J 3/05* [(2006.01)]  *C08L 27/12* [(2006.01)]

(21) Application number: **06731797.4**

(22) Date of filing: **13.04.2006**

(86) International application number:
**PCT/JP2006/307861**

(87) International publication number:
**WO 2006/109854 (19.10.2006 Gazette 2006/42)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.04.2005  JP 2005116346**

(71) Applicant: **DAIKIN INDUSTRIES, LTD.**
**Osaka-shi, Osaka 530-8323 (JP)**

(72) Inventors:
- **TSUDA, Nobuhiko**
  **Settsu-shi, Osaka 5668585 (JP)**
- **SAWAUCHI, Chie**
  **Settsu-shi, Osaka 5668585 (JP)**

(74) Representative: **HOFFMANN EITLE**
**Patent- und Rechtsanwälte**
**Arabellastrasse 4**
**81925 München (DE)**

(54) **PROCESS FOR PRODUCING AQUEOUS FLUOROPOLYMER DISPERSION**

(57)    The invention provides a method of producing an aqueous fluoropolymer dispersion having a fluoropolymer concentration sufficiently high for practical purposes by using the technique of phase separation. The present invention is a method of producing an aqueous fluoropolymer dispersion comprising a step (1) of adding a nonionic surfactant having a cloud point to an aqueous fluoropolymer dispersion to be treated, a step (2), following the step (1), of phase separating into a supernatant phase and an aqueous fluoropolymer dispersion phase within a specific temperature range, and a step (3) of recovering the aqueous fluoropolymer dispersion phase by removing the supernatant phase, the specific temperature range being lower than the cloud point of the nonionic surfactant.

**Description**

TECHNICAL FIELD

The present invention relates to a method of producing an aqueous fluoropolymer dispersion.

BACKGROUND ART

Aqueous fluoropolymer dispersions, when applied by such a method as coating or impregnation, can form films showing favorable characteristics such as chemical stability, nontickiness and weather resistance. Thus, they have been widely used in such fields of application as lining of cooking utensils and pipes/tubes and manufacture of impregnated glass cloth membranes. In these applications, aqueous fluoropolymer dispersions high in fluoropolymer concentration are preferred and, therefore, those dispersions obtained by concentration following polymerization of a fluoromonomer(s) in an aqueous medium in the presence of a fluorinated emulsifier are generally used. Since, however, such a fluorinated emulsifier causes impairments in those good characteristics of fluoropolymers, it is desirable that such emulsifier be eliminated from the aqueous fluoropolymer dispersions. In addition, the fluorinated emulsifier is generally expensive and it is preferred that it be recovered for reuse.

A method known for recovering fluorinated emulsifiers comprises removing perfluorooctanoic acid and salts thereof as contained in polytetrafluoroethylene [PTFE] dispersions out of the system by a process (cf. e.g. Patent Document 1: Japanese Kokai Publication S55-120630).

The recovery of a fluorinated emulsifier from an aqueous fluoropolymer dispersion using an ion exchanger has also been proposed. For example, in Patent Document 2 (Japanese Kohyo Publication 2002-532583), it is proposed that a fluorinated anionic surfactant be removed from an aqueous fluoropolymer dispersion by adding a nonionic surfactant to the dispersion, followed by contacting with an anion exchanger.

In Patent Document 3 (Japanese Kohyo Publication 2003-531232), there is disclosed a method of concentrating an aqueous fluoropolymer dispersion by evaporation under acidic conditions and it is described that fluorinated surfactants can be removed by this method.

A method of removing fluorinated emulsifiers from products has been proposed which comprises carrying out a concentration procedure in the presence of a large amount of a nonionic surfactant and separating the supernatant (cf. e.g. Patent Document 4: WO 03/078479). Further, in Patent Document 5 (WO 2004/050719), there is described a method of removing a fluorinated emulsifier in an aqueous fluoropolymer dispersion which comprises subjecting the aqueous dispersion to a plurality of times of a concentration procedure using a large amount of a nonionic surfactant; however, the document makes no mention of the problem that the concentration procedure, when repeated, results in failure to increase the concentration any longer. None of the documents cited above describes that those aqueous fluoropolymer dispersions which have attained a sufficiently practical fluoropolymer concentration and have a reduced fluorinated surfactant concentration can be produced under ordinary phase separation/concentration conditions.

DISCLOSURE OF INVENTION

PROBLEMS WHICH THE INVENTION IS TO SOLVE

In view of the above-discussed state of the art, it is an object of the present invention to provide a method of producing an aqueous fluoropolymer dispersion with a fluoropolymer concentration sufficiently high from the practical viewpoint by using a phase separation technique.

MEANS FOR SOLVING THE PROBLEMS

The present invention is a method of producing an aqueous fluoropolymer dispersion comprising a step (1) of adding a nonionic surfactant having a cloud point to an aqueous fluoropolymer dispersion to be treated, a step (2), following the step (1), of phase separating into a supernatant phase and an aqueous fluoropolymer dispersion phase within a specific temperature range, and a step (3) of recovering the aqueous fluoropolymer dispersion phase by removing the supernatant phase, the specific temperature range being lower than the cloud point of the nonionic surfactant.

In the following, the present invention is described in detail.

The method of producing an aqueous fluoropolymer dispersion according to the invention comprises the step (1) of adding a nonionic surfactant to an aqueous fluoropolymer dispersion to be treated.

The aqueous fluoropolymer dispersion to be treated is a dispersion comprising a fluoropolymer dispersed in an aqueous medium.

The aqueous fluoropolymer dispersion to be treated is not particularly restricted but may be any dispersion comprising the fluoropolymer dispersed in the aqueous medium. For example, it may be the aqueous dispersion as polymerized for the production of the fluoropolymer or the aqueous dispersion obtained by subjecting the aqueous dispersion just after polymerization to such an after-treatment as a treatment for reducing the fluorinated anionic surfactant content and/or concentration.

The fluoropolymer in the aqueous fluoropolymer dispersion to be treated is a polymer containing fluorine atoms each bound to a carbon atom.

The fluoropolymer is, for example, an elastomeric fluoropolymer, a non-melt-processable fluoropolymer or a melt-processable fluoropolymer.

The elastomeric fluoropolymer is a noncrystalline fluoropolymer having rubber elasticity generally having a first monomer-derived monomer unit content of 30 to 80% by mass. The term "first monomer" as used herein means vinylidene fluoride [VDF] or tetrafluoroethylene [TFE] which is now constitutes the largest mass proportion of monomer units among all monomer units in the molecular structure of the elastomeric fluoropolymer.

The term "monomer unit" as used herein referring to the first monomer-derived monomer unit, for instance, means the moiety which is a part of the molecular structure of the fluoropolymer and is derived from the corresponding monomer. The TFE unit, for instance, is the moiety which is a part of the molecular structure of the fluoropolymer and is derived from TFE and is represented by - $(CF_2\text{-}CF_2)$ -. The above-mentioned "all monomer units" include all monomer-derived moieties in the molecular structure of the fluoropolymer.

As the elastomeric fluoropolymer, there may be mentioned, among others, such TFE-based polymers as TFE/propylene copolymers and TFE/per-fluoro(vinyl ether) copolymers, such hexafluoropropylene [HFP]-based polymers as HFP/ethylene copolymers, and such VDF-based polymers as VDF/HFP copolymers, VDF/chlorotrifluoroethylene [CTFE] copolymers, VDF/TFE copolymers, VDF/perfluoro(alkyl vinyl ether) [PAVE] copolymers, VDF/TFE/HFP copolymers, VDF/TFE/CTFE copolymers and VDF/TFE/PAVE copolymers.

The non-melt-processable fluoropolymer is, for example, a polytetrafluoroethylene [PTFE].

In the present specification, the above-mentioned PTFE conceptually includes not only TFE homopolymers but also modified polytetrafluoroethylene [modified PTFEs].

In the present specification, the above-mentioned modified PTFE means a copolymer of TFE and a small proportion monomer other than TFE which is not melt-processable.

The very small proportion monomer in the above modifications includes, for example, fluoroolefins such as HFP and CTFE, fluoro(alkyl vinyl ether) species whose alkyl group contains 1 to 5 carbon atoms, in particular 1 to 3 carbon atoms; fluorodioxole; perfluoroalkylethylenes; and ω-hydroperfluoroolefins, among others.

The content of very small proportion monomer-derived very small proportion monomer units relative to all monomer units in the modified PTFEs is generally within the range of 0.001 to 2 mole percent.

The phrase "content (mole percent) of very small proportion monomer units relative to all monomer units" as used herein means the mole fraction (mole percent) of the very small proportion monomer from which the very small proportion monomer unit is derived, relative to all monomers from which the "all monomer units" are derived, namely the total amount of the monomers involved in the constitution of the fluoropolymer.

The melt-processable fluoropolymer mentioned above is, for example, an ethylene/TFE copolymer [ETFE], a TFE/HFP copolymer [FEP], a TFE/perfluoro (alkyl vinyl ether) copolymer [TFE/PAVE copolymer], PVDF, a VDF-based copolymer or poly (vinyl fluoride) [PVF].

The TFE/PAVE copolymer includes TFE/perfluoro(methyl vinyl ether) [PMVE] copolymers [MFAs], TFE/perfluoro(ethyl vinyl ether) [PEVE] copolymers, TFE/perfluoro(propyl vinyl ether) [PPVE] copolymers and the like.

The VDF-based copolymer as a melt-processable fluoropolymer includes VDF/TFE copolymers, VDF/HFP copolymers, VDF/CTFE copolymers, VDF/TFE/HFP copolymers, VDF/TFE/CTFE copolymers and the like.

Preferred as the fluoropolymer in the aqueous fluoropolymer dispersion to be treated are perfluoropolymers and, among them, PTFE is more preferred.

The fluoropolymer has an average particle diameter of 50 to 500 nm, preferably 100 to 350 nm.

The average particle diameter is determined in the following manner. A working curve is constructed which shows the relation between the transmittance of incident light rays having a wavelength of 550 nm per unit length of the aqueous dispersion having a fluoropolymer concentration adjusted to 0.22% by mass and the average particle diameter determined by particle diameter measurements in a certain specific direction on a transmission electron photomicrogaph, and the average particle diameter of a sample is determined, using the working curve, from the transmittance as measured in the above manner.

The aqueous medium in the aqueous fluoropolymer dispersion to be treated is not particularly restricted but may be any water-containing liquid. Thus, it may contain, in addition to water, a fluorine-free organic solvent and/or a fluorinated organic solvent, such as, for example, an alcohol, ether, ketone or paraffin wax.

The aqueous fluoropolymer dispersion to be treated generally has a fluoropolymer concentration of 5 to 60% by mass.

When the above-mentioned fluoropolymer concentration is lower than 5% by mass, the phase separation into the supernatant phase and aqueous fluoropolymer dispersion phase in carrying out the separation step to be described later herein may become difficult. When, on the other hand, it is above 60% by mass, it becomes sometimes difficult to remove the fluorinated anionic surfactant occurring in the aqueous fluoropolymer dispersion under treatment.

A preferred lower limit to the above-mentioned fluoropolymer concentration is 10% by mass, a more preferred lower limit thereto is 15% by mass, a preferred upper limit thereto is 40% by mass, and a more preferred upper limit thereto is 30% by mass.

The fluoropolymer concentration (P), so referred to herein, is determined by weighing about 1 g (X) of the sample in an aluminum cup having a diameter of 5 cm, drying the same at 100°C for 1 hour and further at 300°C for 1 hour to give a heating residue (Z) and making a calculation as follows: P = Z/X x 100 (%).

The aqueous fluoropolymer dispersion to be treated may further contain a surfactant.

The surfactant is not particularly restricted but may be, for example, a nonionic surfactant or anionic surfactant known in the art or a fluorinated surfactant.

The nonionic surfactant may be any one known in the art and includes, among others, ether type nonionic surfactants such as polyoxyethylene alkylphenyl ethers, polyoxyethylene alkyl ethers and polyoxyethylenealkylene alkyl ethers; polyoxyethylene derivatives such as ethylene oxide/propylene oxide block copolymers; ester type nonionic surfactants such as sorbitan fatty acid esters, polyoxyethylenesorbitan fatty acid esters, polyoxyethylenesorbitol fatty acid esters, glycerol fatty acid esters and polyoxyethylene fatty acid esters; amine type nonionic surfactants such as polyoxyethylenealkylamines and alkylalkanolamides; and the like. The nonionic surfactant may be an aromatic compound, a straight chain compound or a branched chain-containing compound. Preferably, however, it is a straight chain compound or branched chain-containing compound having no alkylphenol moiety in the structure thereof. Those examples given later herein as the nonionic surfactants having a cloud point are more preferred.

The above anionic surfactant is preferably one comprising a fluorinated surfactant. The fluorinated surfactant is not particularly restricted but may be any one comprising a fluorinated compound and having emulsifying activity. Preferably, the constituent fluorinated compound has an average molecular weight of not higher than 1000, more preferably from the ease of removal viewpoint, not higher than 500.

The fluorinated surfactant is preferably one comprising a fluorinated compound containing 5 to 12 carbon atoms. When the number of carbon atoms is less than 5, no emulsifying activity can generally be displayed.

The fluorinated surfactant is preferably one comprising such a fluorinated anionic compound as a fluorinated carboxylic acid compound or a fluorinated sulfonic acid compound, more preferably one comprising a fluorinated carboxylic acid compound, still more preferably one comprising a fluorinated carboxylic acid compound containing 5 to 12 carbon atoms, more preferably perfluorooctanoic acid ammonium or a salt thereof.

Usable as the above anionic surfactant is, for example, an anionic fluorinated surfactant (hereinafter sometimes referred to as "fluorinated anionic surfactant"). Usable as the fluorinated anionic surfactant are, for example, perfluorooctanoic acid and salts thereof (hereinafter, "perfluorooctanoic acid and salts thereof" are sometimes collectively referred to as "PFOA" for short), perfluorooctylsulfonic acid and salts thereof (hereinafter, "perfluorooctylsulfonic acid and salts thereof" are sometimes collectively referred to as "PFOS" for short) and like known fluorinated anionic surfactants.

When the above-mentioned PFOA or PFOS is in the form of a salt, the salt is not particularly restricted but may be the ammonium salt, among others.

The above fluorinated surfactant may also be the one added as an emulsifier (polymerization emulsifier) on the occasion of production, by polymerization in an aqueous medium, of the fluoropolymer constituting the above aqueous fluoropolymer dispersion to be treated.

The aqueous fluoropolymer dispersion to be treated may contain the fluorinated anionic surfactant. at a concentration of, for example, not higher than 1000 ppm, or not higher than 500 ppm, or not higher than 100 ppm, of the aqueous fluoropolymer dispersion to be treated.

The method of producing an aqueous fluoropolymer dispersion according to the invention is advantageous in that even when the fluorinated anionic surfactant concentration in the aqueous fluoropolymer dispersion to be treated is in such a low range as mentioned above, an aqueous fluoropolymer dispersion having a fluoropolymer concentration sufficiently high for practical purposes can be obtained.

The method of producing an aqueous fluoropolymer dispersion according to the invention is advantageous in that even when the aqueous fluoropolymer dispersion to be treated has a fluorinated anionic surfactant concentration as low as 100 ppm or lower based on the aqueous fluoropolymer dispersion, an aqueous fluoropolymer dispersion further reduced in fluorinated anionic surfactant concentration can be obtained.

The fluorinated anionic surfactant content in the aqueous fluoropolymer dispersion to be treated or in the aqueous fluoropolymer dispersion, so referred to herein, is measured by subjecting a mixture of equal amounts of such aqueous dispersion and methanol to Soxhlet extraction and subjecting the extract obtained to high-performance liquid chromatography [HPLC] under the conditions specifically given later herein.

The aqueous fluoropolymer dispersion to be treated can be prepared by producing the fluoropolymer by polymerization in the conventional manner, for example by suspension polymerization or emulsion polymerization.

The fluorinated monomer(s), nonfluorinated monomer(s) and additives (polymerization initiator, chain transfer agent, etc.) to be used in the above polymerization each may be any proper one known in the art and, in the above polymerization, the above-mentioned polymerization emulsifier can be used according to need.

From the polymerization efficiency viewpoint, the above polymerization is preferably carried out in the presence of a fluorinated surfactant in an amount of 0.0001 to 10% by mass relative to the aqueous medium. The amount of the fluorinated surfactant is preferably not smaller than 0.001% by mass, more preferably not smaller than 1% by mass, relative to the aqueous medium.

The aqueous fluoropolymer dispersion to be treated is preferably one that has experienced at least one fluorinated anionic surfactant removing step.

The above-mentioned fluorinated anionic surfactant removing step is not particularly restricted but preferably comprises at least one removing step selected from among a phase separation, an ion exchange resin treatment, a membrane treatment, an electrophoresis and an evaporation, more preferably at least one removing step selected from among a phase separation, an ion exchange resin treatment and a membrane treatment, still more preferably a phase separation.

The above-mentioned phase separation can be realized, for example, by adding, to a fluoropolymer emulsion polymerization mixture containing 10 to 50% by weight of a fluoropolymer as obtained by polymerization, water and a nonionic surfactant whose inorganicity/organicity ratio is 1.07 to 1.50 in an amount within a specific range described in WO 2003/078479.

The ion exchange resin treatment mentioned above can be carried out, for example, by adding, to an aqueous fluoropolymer dispersion containing 15 to 30% by mass of a fluoropolymer, a nonionic surfactant in an amount of 0.5 to 15% by mass in the aqueous dispersion, further adjusting the pH 7 to 9 and bringing the resulting mixture with an anion exchanger comprising a strongly basic resin adjusted in advance to the OH form in a basic environment, preferably according to the method described in Japanese Kohyo Publication 2002-532583.

The membrane treatment mentioned above can be carried out, for example, by adding, to an aqueous fluoropolymer dispersion, 0.5 to 12% by mass, relative to the fluoropolymer, of a nonionic surfactant and passing the resulting mixture through a semipermeable ultrafilter membrane, preferably according to the method described in Japanese Kokai Publication S55-120630.

The electrophoresis mentioned above can be carried out, for example, by subjecting an aqueous fluoropolymer dispersion containing not less than 5% by mass, based on the fluoropolymer, of a nonionic surfactant to batchwise electrophoresis using an electrodialyzer having cellulose membranes capable of cutting off molecules with a molecular weight of 1000 or higher, with a membrane distance of 0.5 to 30 mm, at a current density of 90 to 320 mA/m$^2$, preferably according to the method described in Japanese Kokai Publication H10-51472.

The evaporation mentioned above can be carried out, for example, by adjusting an aqueous fluoropolymer dispersion containing an amount corresponding to 0.5 to 10% by mass of the amount of the fluoropolymer of a nonionic surfactant to a pH lower than 5, preferably pH 1 to 3, and evaporating the fluorinated surfactant under vacuum, preferably according to the method described in Japanese Kohyo Publication 2003-531232 .

The above-mentioned fluorinated anionic surfactant removing step is preferably carried out using a nonionic surfactant. As the nonionic surfactant, there may be mentioned those given hereinabove as examples referring to the aqueous fluoropolymer dispersion to be treated and, among those examples, nonionic surfactants comprising a straight chain compound (s) or branched chain compound (s) having no alkylphenol moiety in the structure thereof can be used.

Thus, when the phase separation is carried out as the above-mentioned fluorinated anionic surfactant removing step, for instance, the nonionic surfactant is preferably added in an amount of 5 to 40 parts by mass, more preferably 10 to 30 parts by mass, per 100 parts by mass of the fluoropolymer in the aqueous fluoropolymer dispersion to be treated.

In cases where the ion exchange resin treatment is carried out as the fluorinated anionic surfactant removing step, the nonionic surfactant is preferably added in an amount of 0.5 to 30 parts by mass, more preferably 0.5 to 10 parts by mass, per 100 parts by mass of the fluoropolymer in the aqueous fluoropolymer dispersion to be treated.

The cloud point mentioned above means the temperature at which an aqueous solution of the nonionic surfactant after once becoming cloudy upon heating again becomes wholly transparent upon gradual cooling.

In the present specification, the cloud point is the value measured according to ISO 1065 (Method A), namely by placing 15 ml of a diluted measurement sample in a test tube, heating the sample until becoming completely opaque, then gradually cooling the same with stirring and determining the temperature at which the whole liquid becomes transparent.

As the above-mentioned "nonionic surfactant having a cloud point", there may be mentioned, for example, those enumerated hereinabove referring to the aqueous fluoropolymer dispersion to be treated. Among them, those having a polyoxyethylene alkyl ether structure are preferred, those having a polyoxyethylene alkyl ether structure whose alkyl group contains 10 to 20 carbon atoms are more preferred, and those having a polyoxyethylene alkyl ether structure whose alkyl group contains 10 to 15 carbon atoms are still more preferred. As such nonionic surfactants having a polyoxyethylene alkyl ether structure, there may be mentioned, for example, Noigen TDS-80 (product of Daiichi Kogyo Seiyaku) and the like.

In the practice of the invention, the nonionic surfactant having a cloud point is preferably added to the aqueous fluoropolymer dispersion to be treated with stirring.

By stirring the aqueous fluoropolymer dispersion, it becomes easy for the nonionic surfactant added to be uniformly dispersed in the treatment target aqueous fluoropolymer dispersion and rapidly migrate into the supernatant phase in the step (2) to be described later herein; thus, the process time can be further shortened.

The addition of the nonionic surfactant can be made after adjustment of the aqueous fluoropolymer dispersion to be treated to pH 3 to 12 with aqueous ammonia or the like.

In the practice of the invention, the nonionic surfactant having a cloud point is preferably added not later than the start of the step (2) in an amount of 5 to 40 parts by mass per 100 parts by mass of the fluoropolymer in the aqueous fluoropolymer dispersion to be treated.

When the amount of the nonionic surfactant is smaller than 5 parts by mass per 100 parts by mass of the fluoropolymer, the separation into the supernatant phase and aqueous fluoropolymer dispersion phase may sometimes become difficult and, when it is larger than 40 parts by mass per 100 parts by mass of the fluoropolymer, the economic feature may be impaired.

A more preferred lower limit to the amount of the nonionic surfactant is 10 parts by mass per 100 parts by mass of the fluoropolymer and a more preferred upper limit thereto is 30 parts by mass per 100 parts by mass of the fluoropolymer.

When an aqueous fluoropolymer dispersion already at least once subjected to a fluorinated anionic surfactant removing step using a nonionic surfactant is used as the aqueous fluoropolymer dispersion to be treated, the amount of the nonionic surfactant having a cloud point includes the residual amount of the nonionic surfactant added in that fluorinated anionic surfactant removing step.

The nonionic surfactant content (N), so referred to herein, is determined by weighing about 1 g (X) of the sample in an aluminum cup with a diameter of 5 cm, drying the same at 100°C for 1 hour to give a heating residue (Y) and further at 300°C for 1 hour to give a heating residue (Z), and making calculations as follows: $N = (Y - Z)/X \times 100$ (%) and $P = Z/X \times 100$ (%).

The method of producing an aqueous fluoropolymer dispersion according to the invention comprises the step (2) of phase separating into the supernatant phase and aqueous fluoropolymer dispersion phase within a specific temperature range following the above step (1).

The above-mentioned specific temperature range can be selected according to the fluoropolymer species, the nonionic surfactant species, the amounts thereof and other factors within a range lower than the cloud point of the nonionic surfactant added in the step (1), preferably within a range not lower by 20°C than the cloud point, more preferably not lower by 15°C than the cloud point, still more preferably not lower by 10°C than the cloud point. At excessively low temperatures, the aqueous fluoropolymer dispersion obtained tends to have a decreased fluoropolymer concentration.

The phase separation in the above step (2), which is to be carried out at a temperature within the above-mentioned specific temperature range, may be carried out with or without stirring the mixture composed of the aqueous fluoropolymer dispersion to be treated and the nonionic surfactant.

As regards the conventional phase separation method, it is described that the phase separation temperature should be not lower than the cloud point of the nonionic surfactant used. On the contrary, the method of producing an aqueous fluoropolymer dispersion according to the invention, according to which the phase separation is carried out at a temperature lower than the cloud point of the nonionic surfactant, makes it possible to prepare aqueous fluoropolymer dispersions having a fluoropolymer concentration sufficiently high for practical purposes.

The method of producing an aqueous fluoropolymer dispersion according to the invention comprises the step (3) of recovering the aqueous fluoropolymer dispersion phase by removing the supernatant phase.

The method of removing the supernatant phase is not particularly restricted but may be such a conventional method as decantation.

The aqueous fluoropolymer dispersion obtained in accordance with the present invention may be the aqueous dispersion itself as obtained as the aqueous fluoropolymer dispersion phase mentioned above or may be a product derived from the aqueous fluoropolymer dispersion phase obtained by such an after-treatment known in the art as concentration adjustment by addition of water and/or a nonionic surfactant or pH adjustment by addition of aqueous ammonia, for instance.

The above-mentioned aqueous fluoropolymer dispersion preferably has a fluoropolymer concentration of not lower than 35% by mass, more preferably not lower than 45% by mass, still more preferably not lower than 55% by mass. The above-mentioned aqueous fluoropolymer dispersion can have a fluoropolymer concentration within the above range, without subjecting the aqueous fluoropolymer dispersion phase to any of those concentration procedures known in the art.

The method of producing an aqueous fluoropolymer dispersion according to the invention, according to which the phase separation is carried out within the above-specified temperature range, can further reduce the fluorinated anionic surfactant content even when the aqueous fluoropolymer dispersion to be treated has a fluorinated anionic surfactant concentration as low as about 1000 ppm.

The aqueous fluoropolymer dispersion obtained in accordance with the invention is low in every kind of surfactant, as mentioned above, and, therefore, will not undergo deteriorations in fluoropolymer characteristics as caused by various surfactants. Thus, the above aqueous fluoropolymer dispersion can be easily processed into fluoropolymer powders, fluoropolymer moldings and so forth. The fluoropolymer moldings obtained are excellent in such physical properties as thermal stability, chemical resistance, durability, weather resistance, surface characteristics and mechanical characteristics and can be usefully used as a material for lining cooking utensils and pipes/tubes, for impregnating glass cloths, and as a binder for cells/batteries, among others.

EFFECTS OF THE INVENTION

The method of producing an aqueous fluoropolymer dispersion according to the invention, which has the constitution described hereinabove, can readily produce an aqueous fluoropolymer dispersion having a fluoropolymer concentration sufficiently high for practical purposes.

BEST MODES FOR CARRYING OUT THE INVENTION

The following examples and comparative examples illustrate the present invention in further detail. These examples are, however, by no means limitative of the scope of the invention.
In the examples and comparative examples, "part (s) " means "part(s) by mass", unless otherwise specified.
The measurements made in the examples and comparative examples were carried out respectively by the following methods.

1. Nonionic surfactant concentration and fluoropolymer concentration
About 1 g (X) of the sample was weighed in an aluminum cup with a diameter of 5 cm, the same was dried at 100°C for 1 hour to give a heating residue (Y) and further dried at 300°C for 1 hour to give a heating residue (Z), and calculations were made as follows:

$$N = (Y - Z)/X \times 100 \ (\%);$$

$$P = Z/X \times 100 \ (\%).$$

(In the above formulas, N is the nonionic surfactant concentration and P is the fluoropolymer concentration.)
2. Fluorinated anionic surfactant concentration

(1) Concentration in aqueous fluoropolymer dispersion obtained by emulsion polymerization
Measurements were made by carrying out high-performance liquid chromatography [HPLC] under the conditions described below.
HPLC measurement conditions
Column: ODS-120T (4.6 ø x 250 mm, product of Tosoh Corp.)
Developing solution: Acetonitrile/0.6% (by mass) aqueous perchloric acid solution = 60/40 (vol/vol %)
Sample size: 20 µL
Flow rate: 1.0 ml/minute
Detection wavelength: UV 210 nm
Column temperature: 40°C

Determination limit: 10 ppm
In calculating the fluorinated anionic surfactant concentration, use was made of a working curve obtained by subjecting aqueous fluorinated anionic surfactant solutions with known concentrations to HPLC measurements using the above-mentioned developing solution under the conditions mentioned above.
(2) Concentrations in aqueous fluoropolymer dispersion to be treated and in aqueous fluoropolymer dispersion phase
To the measurement target aqueous fluoropolymer dispersion was added an equal amount of methanol and, then, Soxhlet extraction was carried out, and the extract was subjected to HPLC measurement under the conditions given above. The Soxhlet extraction was carried out using about 10 g of the measurement target aqueous fluoropolymer dispersion, with an equal amount of methanol added for causing coagulation, and using 100 g of methanol at 90°C for 10 hours.

Example 1

A 450-gram portion of an aqueous polytetrafluoroethylene [PTFE] dispersion obtained by emulsion polymerization (fluoropolymer content 34%, ammonium perfluorooctanoate [PFOA] content 790 ppm) was adjusted to pH 9 by addition of 28% aqueous ammonia, 35 g of water and 15 g of a nonionic surfactant (product name: Noigen TDS-80, product of Daiichi Kogyo Seiyaku, cloud point 58°C) were added, and the mixture was stirred at 40°C for homogenization. The mixture obtained was heated at 56°C for 6 hours and then allowed to separate into a supernatant phase and an aqueous fluoropolymer dispersion phase. The aqueous fluoropolymer dispersion phase was an aqueous fluoropolymer dispersion according to the invention and had a fluoropolymer concentration of 68%, a nonionic surfactant concentration of 2% and a PFOA concentration of 880 ppm of the aqueous fluoropolymer dispersion.

Production Example 1

A 57.7-gram portion of an aqueous PTFE dispersion obtained by emulsion polymerization (fluoropolymer content 25%, PFOA content 625 ppm) was placed in a vessel, the dispersion was adjusted to pH 9 with a 10% aqueous solution of ammonia, 2.9 g of Noigen TDS-80 was then added, and the mixture was stirred at 40°C for homogenization. The vessel was allowed to stand in a warm water tank at 80°C. Upon standing, a transparent supernatant phase immediately appeared and it was observed that the volume proportion of the supernatant phase increased with the lapse of time.
The volume proportion of the supernatant phase became almost constant in 5 minutes after the start of standing. The supernatant phase obtained was removed, and the aqueous fluoropolymer phase was recovered. The aqueous fluoropolymer dispersion phase obtained had a fluoropolymer concentration of 38.0% and a PFOA concentration of 299 ppm of the aqueous fluoropolymer dispersion phase.

Example 2

The aqueous fluoropolymer dispersion phase obtained in Production Example 1 was used as the aqueous fluoropolymer dispersion to be treated. To 50 g of the aqueous fluoropolymer dispersion to be treated, there were further added 75 g of water and 4.8 g of Noigen TDS-80, followed by stirring at 40°C for homogenization. The mixture obtained was heated at 56°C for 6 hours and then allowed to separate into a supernatant phase and an aqueous fluoropolymer dispersion phase. The aqueous fluoropolymer dispersion phase obtained was an aqueous fluoropolymer dispersion according to the invention and had a fluoropolymer concentration of 65%, and the PFOA concentration therein was below the determination limit. Production Example 2

A 370-gram portion of an aqueous PTFE dispersion obtained by emulsion polymerization (fluoropolymer content 34%, PFOA content 790 ppm) was adjusted to pH 9 by addition of 28% aqueous ammonia, 110 g of water and 20 g of Noigen TDS-80 were added, and the mixture was stirred at 40°C for homogenization. The mixture obtained was heated at 70°C for 6 hours and then allowed to separate into a supernatant phase and an aqueous fluoropolymer dispersion phase. The aqueous fluoropolymer dispersion phase obtained had a fluoropolymer concentration of 65%, a nonionic surfactant concentration of 1.8% and a PFOA concentration of 140 ppm of the aqueous fluoropolymer dispersion phase.

Example 3

The aqueous fluoropolymer dispersion phase obtained in Production Example 2 was used as the aqueous fluoropolymer dispersion to be treated. To 19 g of the aqueous fluoropolymer dispersion to be treated were added 2 g of Noigen TDS-80 and 28 g of water, and the mixture was stirred at 40°C for homogenization. The mixture obtained was heated at 56°C for 6 hours and then allowed to separate into an aqueous fluoropolymer dispersion phase and a supernatant phase. The aqueous fluoropolymer dispersion phase obtained was an aqueous fluoropolymer dispersion according to the invention and had a fluoropolymer concentration of 64%, and the PFOA concentration therein was below the determination limit.

Example 4

The aqueous fluoropolymer dispersion phase obtained in Production Example 2 was used as the aqueous fluoropolymer dispersion to be treated. To 19 g of the aqueous fluoropolymer dispersion to be treated were added 3 g of Noigen TDS-80 and 28 g of water, and the mixture was stirred at 40°C for homogenization. The mixture obtained was heated at 56°C for 6 hours and then allowed to separate into an aqueous fluoropolymer dispersion phase and a supernatant phase. The aqueous fluoropolymer dispersion phase obtained was an aqueous fluoropolymer dispersion according to the invention and had a fluoropolymer concentration of 65%, and the PFOA concentration therein was below the determination limit.

Production Example 3

The aqueous fluoropolymer dispersion phase obtained in Production Example 2 was used as the aqueous fluoropolymer dispersion to be treated. To 57 g of the aqueous fluoropolymer dispersion to be treated were added 9 g of Noigen TDS-80 and 84 g of water, and the mixture was stirred at 40°C for homogenization. The mixture obtained was heated at 56°C for 6 hours and then allowed to separate into an aqueous fluoropolymer dispersion phase and a supernatant phase. The aqueous fluoropolymer dispersion phase obtained had a fluoropolymer concentration of 65%, a nonionic surfactant concentration of 1.7% and a PFOA concentration of 60 ppm of the aqueous fluoropolymer dispersion phase.

Example 5

The aqueous fluoropolymer dispersion phase obtained in Production Example 3 was used as the aqueous fluoropolymer dispersion to be treated. To 19 g of the aqueous fluoropolymer dispersion to be treated were added 3 g of Noigen TDS-80 and 28 g of water, and the mixture was stirred at 40°C for homogenization. The mixture obtained was heated at 56°C for 6 hours and then allowed to separate into an aqueous fluoropolymer dispersion phase and a supernatant phase. The aqueous fluoropolymer dispersion phase obtained was an aqueous fluoropolymer dispersion according to the invention and had a fluoropolymer concentration of 66%, and the PFOA concentration therein was below the determination limit.

Comparative Example 1

The aqueous fluoropolymer dispersion phase obtained in Production Example 2 was used as the aqueous fluoropolymer dispersion to be treated. To 19 g of the aqueous fluoropolymer dispersion to be treated were added 2 g of Noigen TDS-80 and 28 g of water, and the mixture was stirred at 40°C for homogenization. The mixture obtained was heated at 70°C for 6 hours and then allowed to separate into a concentrated phase and a supernatant phase. The concentrated phase obtained was analyzed: the fluoropolymer concentration was 24% and the PFOA concentration was below the determination limit.

Comparative Example 2

The aqueous fluoropolymer dispersion phase obtained in Production Example 2 was used as the aqueous fluoropolymer dispersion to be treated. To 19 g of the aqueous fluoropolymer dispersion to be treated were added 3 g of Noigen TDS-80 and 28 g of water, and the mixture was stirred at 40°C for homogenization. The mixture obtained was heated at 70°C for 6 hours and then allowed to separate into a concentrated phase and a supernatant phase. The concentrated phase obtained was analyzed: the fluoropolymer concentration was 23% and the PFOA concentration was below the determination limit.

From the results of the above examples and comparative examples, it was revealed that even when the heating that has so far been performed at a temperature not lower than the cloud point of the nonionic surfactant is carried out at a temperature lower than the cloud point according to the method of producing an aqueous fluoropolymer dispersion according to the invention, the phase separation can be realized and the fluorinated anionic surfactant can be removed. Further, the results of Examples 3 and 4 revealed that even when the method of producing an aqueous fluoropolymer dispersion according to the invention is applied to aqueous fluoropolymer dispersions to be treated low in fluorinated anionic surfactant concentration, the fluorinated anionic surfactant can be removed and, at the same time, aqueous fluoropolymer dispersions sufficiently concentrated for practical purposes can be obtained.

INDUSTRIAL APPLICABILITY

The method of producing an aqueous fluoropolymer dispersion according to the invention, which has the constitution described hereinabove, can produce, with ease, aqueous fluoropolymer dispersions having a fluoropolymer concentration sufficiently high for practical purposes.

**Claims**

1. A method of producing an aqueous fluoropolymer dispersion comprising:

   a step (1) of adding a nonionic surfactant having a cloud point to an aqueous fluoropolymer dispersion to be treated,
   a step (2), following said step (1), of phase-separating into a supernatant phase and an aqueous fluoropolymer dispersion phase within a specific temperature range, and
   a step (3) of recovering said aqueous fluoropolymer dispersion phase by removing said supernatant phase,
   said specific temperature range being lower than said cloud point of said nonionic surfactant.

2. The method of producing an aqueous fluoropolymer dispersion according to claim 1, wherein the aqueous fluoropolymer dispersion to be treated has a fluorinated anionic surfactant concentration of not higher than 1000 ppm of said aqueous fluoropolymer dispersion to be treated.

3. The method of producing an aqueous fluoropolymer dispersion according to claim 1, wherein the aqueous fluoropolymer dispersion to be treated has a fluorinated anionic surfactant concentration of not higher than 500 ppm of said aqueous fluoropolymer dispersion to be treated.

4. The method of producing an aqueous fluoropolymer dispersion according to claim 1, wherein the aqueous fluoropolymer dispersion to be treated has a fluorinated anionic surfactant concentration of not higher than 100 ppm of said aqueous fluoropolymer dispersion to be treated.

5. The method of producing an aqueous fluoropolymer dispersion according to claim 2, 3 or 4, wherein the fluorinated anionic surfactant is a fluorinated carboxylic acid compound.

6. The method of producing an aqueous fluoropolymer dispersion according to claim 2, 3, 4 or 5, wherein the fluorinated anionic surfactant is perfluorooctanoic acid ammonium or a salt thereof.

7. The method of producing an aqueous fluoropolymer dispersion according to claim 1, 2, 3, 4, 5 or 6, wherein the aqueous fluoropolymer dispersion to be treated has already been subjected to at least one fluorinated anionic surfactant removing step.

8. The method of producing an aqueous fluoropolymer dispersion according to claim 7, wherein the fluorinated anionic surfactant removing step comprises at least one removal step selected from among a phase separation, an ion exchange resin treatment, a membrane treatment, an electrophoresis and an evaporation.

9. The method of producing an aqueous fluoropolymer dispersion according to claim 7 or 8, wherein the fluorinated anionic surfactant removing step comprises at least one removal step selected from among a phase separation, an ion exchange resin treatment and a membrane treatment.

<table>
<tr><td colspan="2" align="center">**INTERNATIONAL SEARCH REPORT**</td><td>International application No.<br>PCT/JP2006/307861</td></tr>
</table>

| | |
|---|---|
| A. CLASSIFICATION OF SUBJECT MATTER<br>***C08J3/05***(2006.01), *C08L27/12*(2006.01)<br><br><br>According to International Patent Classification (IPC) or to both national classification and IPC | |

B. FIELDS SEARCHED

Minimum documentation searched (classification system followed by classification symbols)
C08J3/00-3/28, C08F6/00-6/28


Documentation searched other than minimum documentation to the extent that such documents are included in the fields searched
    Jitsuyo Shinan Koho       1922-1996   Jitsuyo Shinan Toroku Koho   1996-2006
    Kokai Jitsuyo Shinan Koho   1971-2006   Toroku Jitsuyo Shinan Koho   1994-2006

Electronic data base consulted during the international search (name of data base and, where practicable, search terms used)


C. DOCUMENTS CONSIDERED TO BE RELEVANT

| Category* | Citation of document, with indication, where appropriate, of the relevant passages | Relevant to claim No. |
|---|---|---|
| X | US 3301807 A (Thiokol Chemical Corp.),<br>31 January, 1967 (31.01.67),<br>Claims; examples<br>(Family: none) | 1-9 |
| X | JP 52-21532 B2 (E.I. Du Pont De Nemours & Co.),<br>11 June, 1977 (11.06.77),<br>Full text<br>& DE 2145952 A        & US 3704272 A<br>& GB 1319206 A       & CA 930090 A<br>& FR 2106536 A | 1-9 |
| A | US 3037953 A (E.I. Du Pont De Nemours & Co.),<br>05 June, 1962 (05.06.62),<br>Full text<br>(Family: none) | 1-9 |

| | |
|---|---|
| ☒  Further documents are listed in the continuation of Box C. | ☐  See patent family annex. |

| | |
|---|---|
| *   Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>   09 May, 2006 (09.05.06) | Date of mailing of the international search report<br>   16 May, 2006 (16.05.06) |
| Name and mailing address of the ISA/<br>   Japanese Patent Office | Authorized officer |
| Facsimile No. | Telephone No. |

Form PCT/ISA/210 (second sheet) (April 2005)

| | **INTERNATIONAL SEARCH REPORT** | International application No. |
|---|---|---|
| | | PCT/JP2006/307861 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 50-51148 A  (Allied Chemical Corp.),<br>07 May, 1975 (07.05.75),<br>Full text<br>& US 3778391 A | 1-9 |
| A | US 2559752 A  (E.I. Du Pont De Nemours & Co.),<br>10 July, 1951 (10.07.51),<br>Full text<br>(Family: none) | 1-9 |
| P,X | JP 2005-126715 A  (Solvay Solexis S.p.A.),<br>19 May, 2005 (19.05.05),<br>Full text<br>& EP 1526142 A1       & US 2005/107506 A1 | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55120630 A
- JP 2002532583 A
- JP 2003531232 A
- WO 03078479 A
- WO 2004050719 A
- WO 2003078479 A
- JP H1051472 A